# EUROPEAN PATENT APPLICATION

(11) **EP 1 600 250 A1**
(43) Date of publication of application: **30.11.2005**
(21) Application number: 04102306.0
(22) Date of filing: 26.05.2004
(51) Int. Cl.: B23P 6/00, B60P 3/14

(54) **Mobile wheel reconditioning facility**

(71) Applicant: Wheel Repairs Solutions of Europe B.V., 30071 Norcross, Georgia (US)
(72) Inventor: Morris, Tom, 30092, Norcross (US); Neubauer, Donald Charles, 48080, St Clair Shores (US); Buitendijk, Richard Johannes, 1381 GX, Weesp (NL)
(74) Representative: Aalbers, Arnt Reinier

(57) **Abstract**

The invention relates to a mobile wheel reconditioning facility (1) comprising a plurality of walls (2) determining said facility and a plurality of reconditioning stations, wherein said reconditioning stations at least include a paint station (10) and a wheel spinning station (11). Accordingly the range of operations for reconditioning wheels is expanded by the facility according to the invention, while the mobile nature of the facility allows on-site service. The invention further relates to a paint station (10), a wheel spinning station (11) and a wheel straightener.

## Description

The invention relates to a mobile wheel reconditioning facility.

One of the more prominent features of an automobile is the wheels thereof. Indeed, consumers sometimes expend significant sums during the purchase of new automobiles to upgrade the factory "standard" wheels to a more ornate or stylised wheel. Despite having differing ornamental/aesthetic attributes, automotive wheels are generally fabricated from an aluminium alloy or steel, with aluminium alloy wheels being the most common.

Irrespective of their overall appearance, a common structural attribute or feature of all automotive wheels is the annular outer rim bead which extends in sealed engagement to the tire mounted to the wheel. The outer rim bead typically defines the outer or distal most portion of the wheel, and thus is the most highly susceptible to damage when the corresponding tire is inadvertently subjected to abrasive contact from, for example, a curb as often occurs during turning and parallel parking of the automobile. Because of the orientation of the outer rim bead relative to the tire, the abrasive contact of the tire to a curb or similar obstruction typically results in abrasive contact to the outer rim bead, often causing abrasive damage and/or superficial fragmentation damage to one or more sections thereof attributable to such impact. Due to the visual prominence of the automotive wheels and location of the outer rim bead relative to the tire, damage to even a relatively small section of the outer rim bead is often easily noticeable upon quick visual observation of the wheel. Further parts of wheels that may be damaged include the face of the wheel, the spokes and other parts.

Due to the relatively high cost of automotive wheels, it is often more economical for either the vehicle owner or dealership to incur the cost of off-site repair to an abrasion damaged outer rim bead or other part than to purchase a complete replacement wheel. Of course, it should be appreciated that the degree of damage to the outer rim bead of the wheel must be such that repair or reconditioning is possible, in that extensive damage will necessitate complete replacement of the wheel since the seal between the outer rim bead and the tire cannot be unduly compromised.

US 6,347,444 discloses a method for refurbishing an automotive wheel comprising a first and second grinding process followed by a painting step. The damaged automotive wheel can be refurbished on-site without removing the wheel from the vehicle and without removing the tire from the wheel.

A disadvantage of the prior art this method is that only automotive wheel beads that are to be painted can be reconditioned.

It is an object of the invention to provide a facility that allows a variety of reconditioning processes for wheels, which reconditioning can be performed on-site.

This object is achieved by a mobile wheel reconditioning facility comprising a plurality of walls determining said facility and a plurality of reconditioning stations, wherein said reconditioning stations at least include a paint station and a wheel spinning station.

Apart from painting wheels, alternatively machining of wheels or wheel beads is required for reconditioning of these wheel beads. The wheel spinning station allows rotation of the wheel enabling an operator to machine the wheels or wheel beads, such as polishing or simulating lathe lines with abrasive pads. Accordingly the range of operations for reconditioning wheels is expanded by the facility according to the invention, while the mobile nature of the facility allows on-site service. The painting station and/or the wheel spinning station may be adapted to function within the facility and may be fixated to one or more of the walls of the facility. Fixation of one or more reconditioning stations may be advantageous for a mobile facility.

The invention further relates to a paint station for painting wheels or wheel beads comprising a housing, said paint station being adapted to connect a high volume low pressure paint gun, and ventilation means provided in said housing adapted to generate an air flow for exhausting, in use, volatile organic compounds from said paint gun. The combination of the high pressure low volume paint gun and the ventilation means provides for a paint station that is adapted to function within a mobile facility.

The invention also relates to a reconditioning station for a wheel comprising a flywheel, capturing means to fixate said wheel and driving means for rotating said flywheel. Such a reconditioning station is advantageous for a mobile wheel reconditioning facility in that it expands the range of on-site machining operations for reconditioning of the wheels.

Further advantageous embodiments of the invention are defined in the dependent claims and will be explained in more detail in the description of the invention.

The invention will be further illustrated with reference to the attached drawings, which schematically show a preferred embodiment according to the invention. It will be understood that the invention is not in any way restricted to this specific and preferred embodiment.

In the drawings:
Fig. 1 shows a plan of the interior of a mobile wheel reconditioning facility according to an embodiment of the invention;
Figs. 2A and 2B show a diagrammatic illustration of a paint station in side view and front view respectively, according to an embodiment of the invention;
Figs. 3A and 3B show a diagrammatic illustration of a wheel spinner in side view and top view respectively, according to an embodiment of the invention, and
Figs. 4A-4D show diagrammatic illustrations of a wheel straightener in cross-section and in side-view according to an embodiment of the invention.

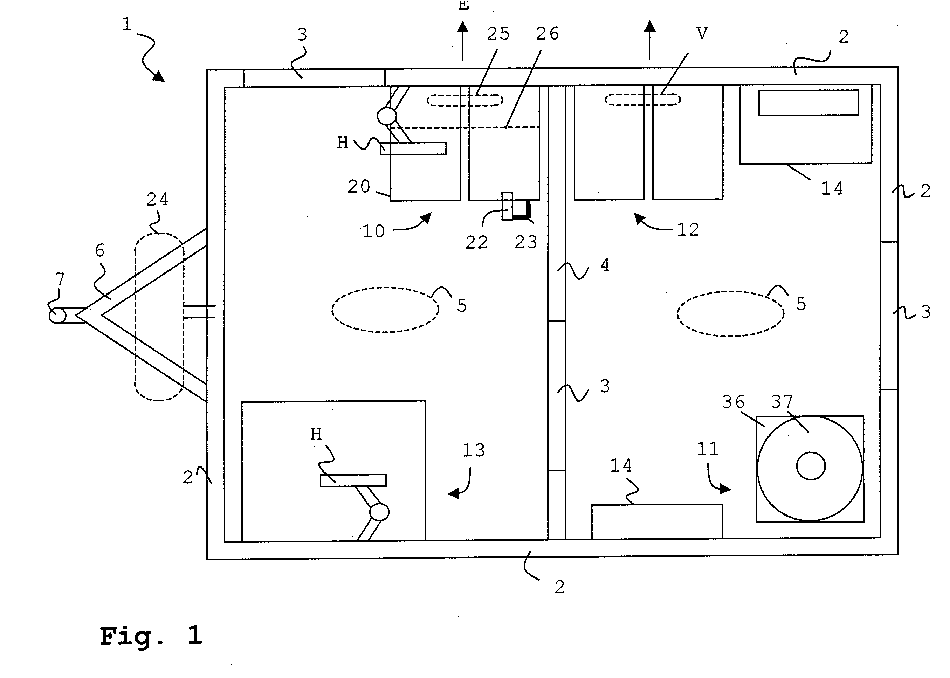

Fig. 1 shows a plan of the interior of a mobile wheel reconditioning facility 1, e.g. a trailer. The trailer 1 is determined by walls 2 having doors 3 for entry and leaving the facility. The room provided by the walls 2 is divided by a further wall 4, also comprising a door 3. The roof (not shown) of the trailer 1 comprises vents 5. The trailer 1 further has a structure 6 for transporting the trailer 1 by means of another vehicle. The structure 6 may comprise a support 7, e.g. a wheel, to allow stand-alone operation of the trailer 1. It should be appreciated that the facility 1 may also comprise a driving compartment and a motor itself, allowing movement of the facility 1 without the aid of another vehicle. In the embodiment of Fig. 1, the dimensions of the trailer 1 are a length of approximately 3,5 metres, a width of approximately 1,8 metres and a height of 2,2 metres.

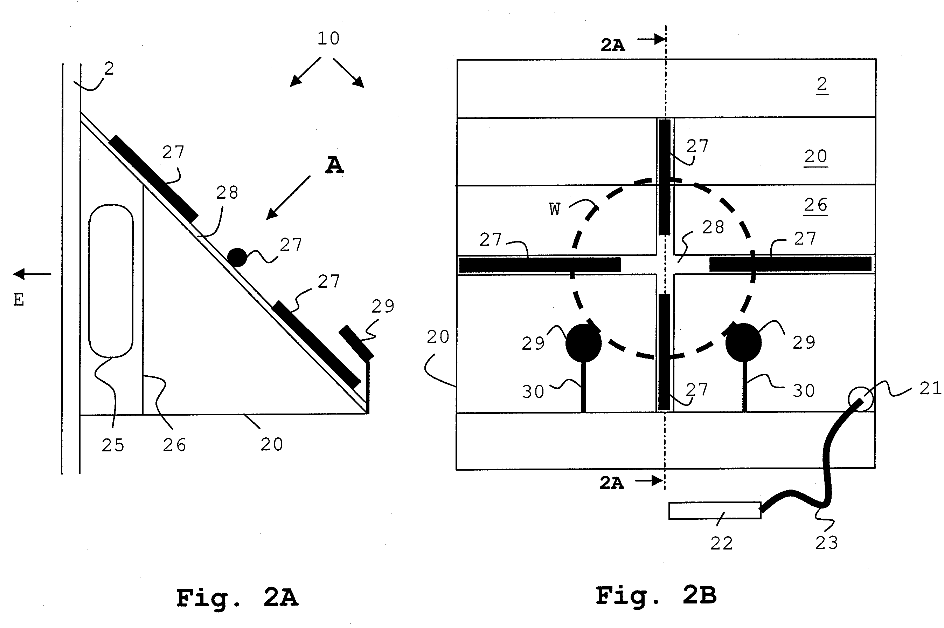

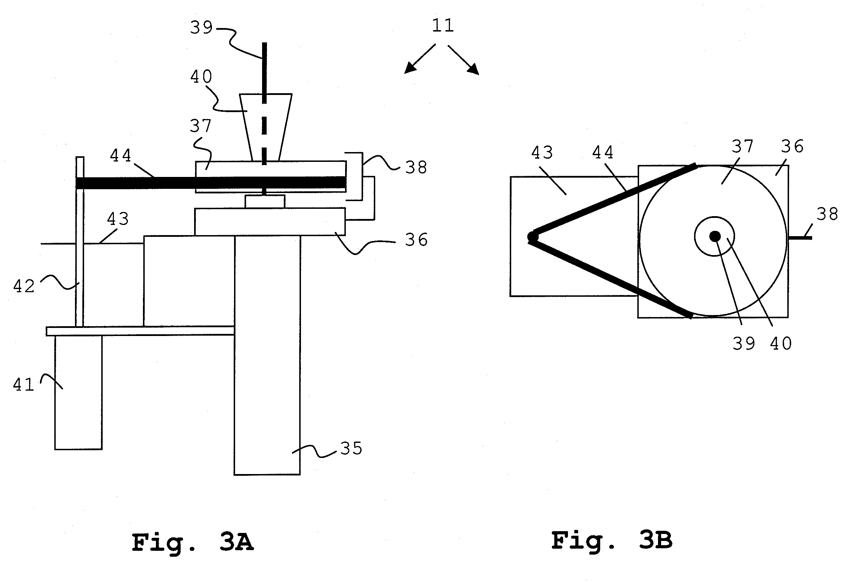

The equipment of the trailer 1 allows a range of operations to be performed for reconditioning wheels, amongst which are a painting station 10 and a wheel spinning station 11. The painting station 10 and wheel spinning station 11 will be described in more detail with respect to Figs. 2A and 2B respectively, Figs. 3A and 3B. The trailer 1 further comprises a preparation station 12 and a drying station 13. Moreover several compartments 14 are provided for storage of tools and materials. Finally a power supply is present.

In operation, a damaged wheel is taken into the trailer 1 through the door 3. First, grinding of the wheel may be performed in the preparation station 12 to an adequate surface for restoration. The grinding process may e.g. involve the first and second grinding processes disclosed in US 6,347,444. In general, the preparation station 12 allows the wheel bead to be prepared to be either painted in the painting station 10 or to be machined by employing the wheel spinning station 11. The preparation station 12 may have ventilation means V to exhaust compounds from the inside of the trailer 1. It should be appreciated that the extent of preparation may depend on the amount of damage of the wheel bead.

If the wheel is to be painted it is subsequently taken from the preparation station 12 through the door 3 in the further wall 4 to the painting station 10. The further wall 4 preserves appropriate conditions in the part of the trailer 1 wherein the wheels are painted and/or dried while simultaneously preparation and/or machining of other wheels is performed. E.g. it is avoided that dust of small particles of wheel beads generated during preparation or machining are transported via the air to the painted wheels.

The painting station 10 is displayed in Figs. 2A and 2B in cross-section along 2A-2A and in front view (i.e. the direction of the arrow B in Fig. 2A). The painting station 10 comprises a housing 20 with an open top that is fixated to a wall 2. The paint station 10 comprises a connection point 21 for a paint gun 22 connected via a hose 23. The paint gun 22 may be a high volume low pressure (HVLP) paint gun. The pressure can be obtained from a compressor air tank 24 (see Fig. 1). A suitable paint gun 22 is a HVLP gravity spray gun as manufactured by Turbo Spray Midwest, Inc. employing an atomising air regulator to control the air flow. The paint flow going out of the HVLP gun 22 can be finely tuned. Such a paint gun 22 reduces contamination and overspray.

The housing 20 of the paint station 10 further comprises ventilation means to generate an air flow E for exhausting, in use, volatile organic compounds (VOC's) from the paint gun 22. The ventilation means comprise an exhaust fan 25 and a filter 26. Accordingly, reconditioning of wheels by painting can be performed in the closed room of the trailer 1, since down draft paint stations 10 catch the VOC's sprayed in the paint process.

Further, the paint station 10 comprises rotation means for rotating the wheel. The circumference of an imaginary wheel W is shown in Fig. 2B for illustrative purposes regarding the rotation means. The rotation means in this embodiment comprise rollers 27 appropriately attached to the housing 20 on a frame 28 and wheels 29 on supports 30. The wheel W can be provided on the rollers 27 such that it is supported by the wheels 29 under an angle of 45 degrees with respect to the wall 2. Accordingly, during painting the wheel W can be rotated over the rollers 27 and supported by the wheels 29 to facilitate painting by means of the HVLP paint gun 22. Is should be appreciated that the configuration of the rotation means may be different; the rollers 27 may e.g. be supported by a frame with only three bars building respective angles of approximately 60 degrees with each other.

After painting, the wheel may be dried either in the painting station 10 itself or in the drying station 13. The drying station 13, and preferably also the painting station 10, are provided with heating means H (see Fig. 1), such as a 1500W heat lamp.

If the wheel or wheel bead is to be machined instead of painted, it is taken to the wheel spinning station 11 after preparation. Such machining may relate to simulating lathe lines by using abrasive pads or polishing to obtain a shiny wheel or wheel bead.

The wheel spinning station 11 comprises a support 35 on top of which a base 36 rests. Over the base 36 a flywheel 37 is rotatably mounted with respect to the base 36. A standard bead breaker 38 is attached to the base 36 as well. A bead breaker allows reconditioning of a wheel or wheel bead without removing the tire from the wheel. The fact that the wheel spinner function and the bead breaking function are combined in one apparatus, wherein the flywheel is provided on top of the bead breaker 38 to optimise the use of floor space in the trailer 1. The flywheel 37 comprises a v-groove (not shown) and a drill rod 39. The drill rod 39 is adapted to receive a cone 40 to constitute capturing means for fixating a wheel.

Further the wheel spinning station comprises driving means 41, such as a DC-motor allowing control of rotation direction and speed of the flywheel 37 and, consequently, of the wheel. The motor 41 drives a shaft 42 that is supported by a pillow block bearing 43 just below a drive pulley 44. The drive pulley 44 is attached to the shaft 42 on one side and accommodated in the v-groove of the flywheel 37 on the other side.

The wheel spinning station 11 is configured such that a wheel can be rotated around its true centre. The inside hub of a wheel is a machined surface. If the wheel is positioned on flywheel 37, it is positioned with its centre hole over the drill rod 39 and the inside hub surface will rest flush against the flywheel 37. Once the wheel is flat against the flywheel 37, it is precisely located axially. Now the tapered cone 40 is placed over the drill rod 39 and as it is pushed into the centre hole of the wheel, the wheel is captured in the wheel spinning apparatus and is located radially. The wheel can now be spun around its true centre. Further positioning means (not shown) may be employed to position the wheel away from the flywheel 37 to avoid contact between the drive pulley 44 and the wheel.

While the wheel is spinning, many different techniques with tools and abrasives can be used to accomplish a wide variety of surface repairs for wheels. Such surface repairs include polishing and simulating lathe lines with abrasive pads.

Since the wheel is precisely centred in a horizontal plane, it can safely be spun on a variable speed DC drive motor in the range of 1 to 450 rpm in either direction. Unique results were achieved by spinning the wheel at a variety of speeds and in opposite directions.

The consistency of spinning speed enables the operator to install simulated machining lines on the wheels. Ultimately, the wheel spinning station can be used for very slow spinning to provide a way to obtain accurate run-out measurements and can be run at other speeds for effective machining operations.

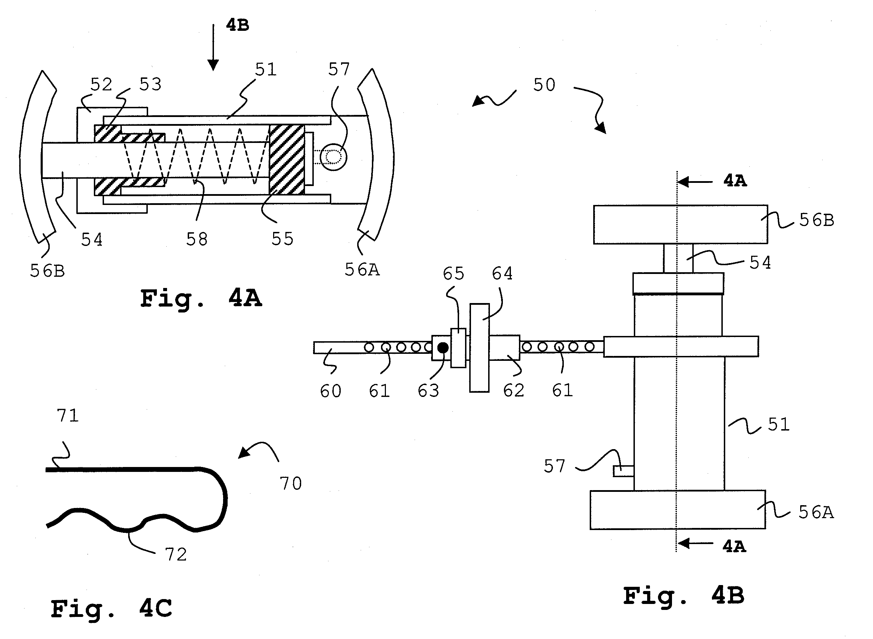

In some instances, the wheels are deformed by e.g. a curb stone. Accordingly, the trailer 1 may have a wheel straightener 50 as schematically displayed in Figs. 4A-4D. Figs. 4A and 4B show the wheel straightener 50 in cross-section 4A-4A and in side view (arrow 4B) respectively. The wheel straightener 50 comprises a cylinder 51 that is closed at one side by a cap 52 and a pressure member 53. Further a plunger rod 54 is connected to a plunger 55. The plunger rod 54 is connected to a curved member 56B. On the other side of the wheel straightener 50 a corresponding curved member 56A is present. Curved member 56A may be stationary with respect to the cylinder 51.

Further the wheel straightener 50 has a connection point 57, e.g. a valve, for feeding a liquid, such as oil, to hydraulically pressurize the system from a liquid reservoir (not shown). A spring 58 is present to exert spring force action on the plunger 55.

Further the wheel straightener 50 may comprise a rod 60 with a plurality of openings 61 that is connected to the cylinder 51. Over the rod 60 a threaded member 62 is applied, that has a central opening (not shown) such that it can move in at least the axial direction along the rod 60. Further the threaded member 60 comprises an opening 63 that is adapted to cooperate with the openings 61. This cooperation can be achieved by a pin member 70 shown in Fig. 4C.

Finally a capture cap 64 and a nut 65 are applied over the threaded member 62, wherein at least the nut 65 is internally threaded such that cooperates with the threads of the member 62.

The wheel straightener 50 may be portable as well as being fixated inside the trailer 1.

In operation the rod 60 is moved through the axial opening of the wheel W. The wheel W is positioned such that the part to be straightened may abut at least one of the curved members 56A, 56B. Subsequently the threaded member 62, comprising the capture cap 64 and nut 65, is moved axially along the rod 60 to an appropriate position and fixated by the pin member 70. In doing so, opening 63 is aligned with an opening 61 of the rod 60 and an end 71 of the pin member 70 is pushed through both the openings 61, 63. The other side of the pin member 70 is bent, enabling curvature 72 to rest or to be forced against the threaded member 62. Then the nut 65 is turned to push the capture cap 64 into the axial opening of the wheel W to hold the wheel during the straightening operation.

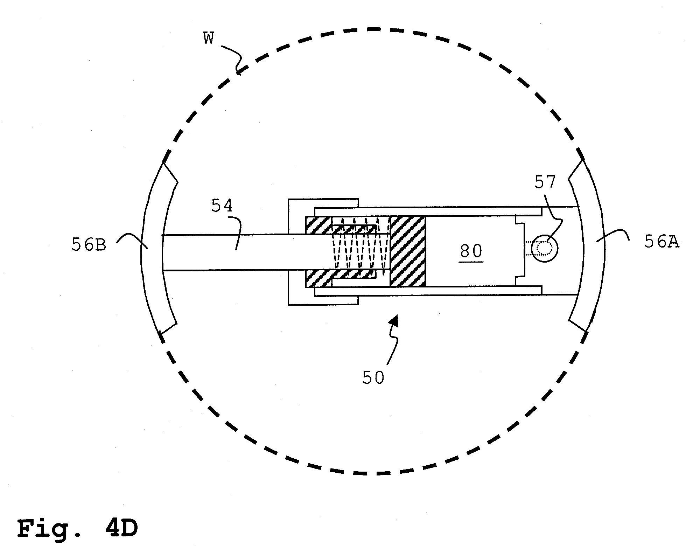

The straightening of the wheel involves the supply of oil in the oil chamber 80 via the valve 57, as shown in Fig. 4D. Consequently, the curved member 56B is pushed out in a radial direction of the wheel W such that the wheel bead is repaired. This hydraulic operation allows a sufficient force to be exerted on the wheel for reparation. Accordingly, the presence of the wheel straightener 50 is useful for the mobile wheel reconditioning facility 1.

In conclusion the invention allows a wide variety of on-site wheel reconditioning operations.

## Claims

1. A mobile wheel reconditioning facility (1) comprising a plurality of walls (2) determining said facility and a plurality of reconditioning stations (10,11,12,13), wherein said reconditioning stations at least include a paint station (10) and a wheel spinning station (11).

2. The mobile wheel reconditioning facility (1) according to claim 1, wherein said reconditioning stations further include a preparation station (12) and/or a drying station (13).

3. The mobile wheel reconditioning facility (1) according to claim 1 or 2, wherein said reconditioning stations further include a wheel straightener (50) for straightening wheels.

4. The mobile wheel reconditioning facility (1) according to claim 1, 2 or 3, wherein one or more of said reconditioning stations (10,11,12,13) are fixated to at least one of said walls (2).

5. The mobile wheel reconditioning facility (1) according to one or more of the preceding claims, wherein said paint station (10) is determined by a housing (20) and ventilation means (25,26) are provided in said housing to generate an air flow for exhausting volatile organic compounds.

6. The mobile wheel reconditioning facility (1) according to claim 5, wherein said ventilation means comprises an exhaust fan (25) and a filter (26).

7. The mobile wheel reconditioning facility (1) according to one ore more of the preceding claims, wherein said facility comprises a connection point (21) for a high volume low pressure paint gun (22).

8. The mobile wheel reconditioning facility (1) according to one ore more of the preceding claims wherein at least one of said reconditioning stations (10) is determined by a housing (20) and said housing comprises rotation means (27,29) for rotating a wheel.

9. The mobile wheel reconditioning facility (1) according to one or more of the preceding claims, wherein said facility comprises one or more further walls (4) separating at least a first reconditioning station (10 from a second reconditioning station (12).

10. The mobile wheel reconditioning facility (1) according to one or more of the preceding claims, wherein said wheel spinning station (11) is combined with a bead breaker (38) .

11. The mobile wheel reconditioning facility (1) according to one or more of the preceding claims, wherein one or more of said reconditioning stations (10;13) comprises heating means (H).

12. A paint station (10) for painting wheels comprising a housing (20), said paint station being adapted to connect a high volume low pressure paint gun (22), and ventilation means (25,26) provided in said housing (20) adapted to generate an air flow for exhausting, in use, volatile organic compounds from said paint gun (22).

13. The paint station according to claim 12, wherein said ventilation means further comprise an exhaust fan (25) and a filter (26).

14. The paint station according claim 12 or 13, wherein said paint station further comprises rotation means (27,29) for rotating said wheel.

15. A reconditioning station (11) for a wheel of a wheel comprising a flywheel (37), capturing means (39,40) to fixate said wheel and driving means (41) for rotating said flywheel (37).

16. The reconditioning station (11) according to claim 15, wherein said capturing means comprise a central rod (39) attached to said flywheel (37) and a tapered cone (40) adapted to penetrate a centre hole of said wheel.

17. The reconditioning station (11) according to claim 15 or 16, wherein said driving means (41) is a controllable DC motor adapted to rotate said flywheel at a continuous speed in both rotation directions.

18. The reconditioning station (11) according to one or more of the claims 15-17, wherein said reconditioning station further includes a bead breaker (38).

19. The reconditioning station (11) according to claim 18, wherein said bead breaker comprises a base (36) and said flywheel (37) is mounted over said base (36).

20. The reconditioning station (11) according to one or more of the claims 15-19, wherein said recondition station comprises positioning means for positioning a wheel away from the flywheel (37).

21. A wheel straightener (50) comprising a set of curved members (56A,56B) adapted to abut the inner sides of a wheel and hydraulic pressure means adapted to exert a force on said inner sides of said wheel.

22. The wheel straightener (50) of claim 21, wherein said wheel straightener (50) further comprises a rod (60) with at least one opening (61) and means (62,64,65,70) to fixate said wheel when abutting said inner sides.
